# EUROPÄISCHE PATENTANMELDUNG

(11) **EP 1 369 282 A1**
(43) Veröffentlichungstag der Anmeldung: **10.12.2003**
(21) Anmeldenummer: 03012781.5
(22) Anmeldetag: 05.06.2003
(51) Int. Cl.: B60K 15/03

(54) **Gastank, insbesondere für Flüssiggas Propan-Butan**

(30) Priorität: 06.06.2002 PL 35429902
(71) Anmelder: Staniuk, Jacek, 76-200 Slupsk (PL)
(72) Erfinder: Staniuk, Jacek, 76-200 Slupsk (PL)
(74) Vertreter: Meyer, Ludgerus A.

(57) **Zusammenfassung**

Die Erfindung betrifft einen toroidförmigen Gastank, der dadurch charakterisiert ist, dass in einer der Mittel - Bodenplatten (4, 5) ein Sicherheitsventil (10) mit einem Röhrchen (11) auf der Hochachse des Tanks angeordnet ist. Der Tank weist einen Arbeitsraum im toroidförmigen Teil (7) und in der mittleren Kammer (6) auf, die durch die Durchgangsöffnung (8) miteinander verbunden sind.

## Beschreibung

Gegenstand der Erfindung ist ein Gastank, insbesondere für Flüssiggas Propan-Butan, nach dem Oberbegriff des Anspruchs 1.

Aus der polnischen Patentanmeldung P.339784 ist ein toroidförmiger Tank bekannt, der aus zwei profilierten, miteinander auf der Symmetrieachse verbundenen und mit einem profilierten Rohr verbundenen Bodenplatte besteht, wobei das Rohr den mittleren Teil des Tanks bildet. Das mittlere Rohrteil hat zwei zusätzliche Bodenplatten, die leicht nach oben gewölbt sind, die den freien Raum des Tanks abschließen. Das Rohrteil hat auch Durchgangsöffnungen derart, dass der Gesamtrauminhalt des Tanks aus dem toroidförmigen Teil und dem inneren Rohrteil besteht.

Der Erfindung liegt die Aufgabe zugrunde, einen Tank der angegebenen Art so zu verbessern, dass dessen Sicherheit erhöht ist.

Diese Aufgabe wird durch die im Anspruch 1 angegebene Erfindung gelöst. Vorteilhafte Weiterbildungen der Erfindung sind in Unteransprüchen angegeben.

Die Erfindung geht aus von einem Gastank, insbesondere für Flüssiggas Propan-Butan, bestehend aus miteinander verbundenen, profilierten Ober-, Unter- und Bodenplatten und einem mittleren profilierten Rohrteil, wobei das mittlere Rohrteil Durchgangsöffnungen und zwei abschließende zusätzliche Bodenplatten aufweist und eine der Bodenplatten einen Anschlussstutzen enthält.

Erfindungsgemäß ist in einer der zusätzlichen Bodenplatten ein Ventil mit einem Röhrchen auf der Hochachse angeordnet. Das Röhrchen ist vorzugsweise mit einer Kappe abgedeckt. Eine der Bodenplatten kann an ihrem Umfang Spannvorrichtungen aufweisen.

Die Erfindung wird nachstehend anhand eines Ausführungsbeispiels näher erläutert. Es zeigen:

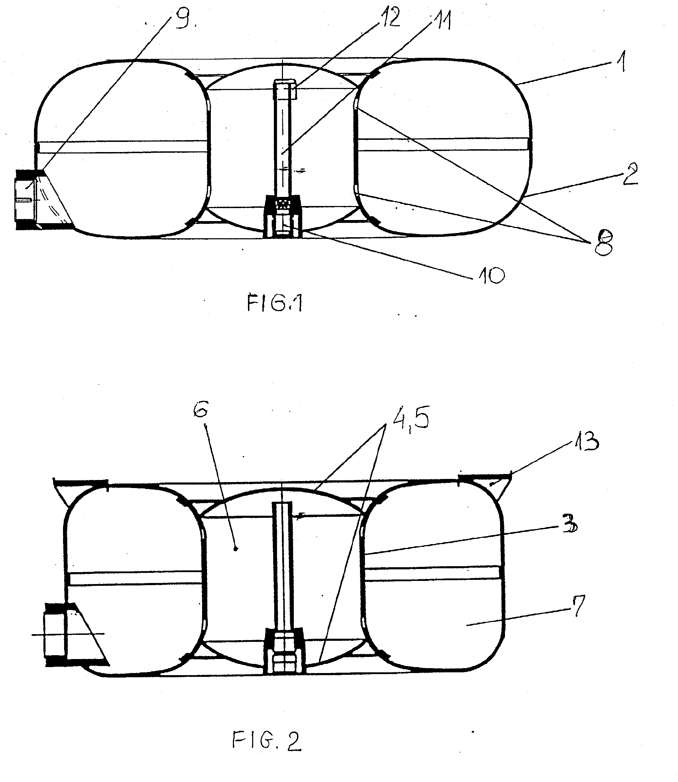

- Fig. 1: den Querschnitt eines Gastanks mit einem Ventil und einem Röhrchen mit Kappe, und
- Fig. 2: den Querschnitt des Gastanks mit einem Ventil und einem Röhrchen mit Kappe sowie mit Spannvorrichtungen-

Ein Gastank, insbesondere für Flüssiggas Propan-Butan besteht gemäß der Erfindung aus zwei Bodenplatten 1, 2, die über das mittlere Rohrteil 3 miteinander verbunden sind. Die Bodenplatten sind insbesondere als ringförmige Halbschalen ausgebildet. Die Bodenplatten 1, 2 sind in unterschiedlicher Form profiliert. Sie sind miteinander vorzugsweise auf der horizontalen Symmetrieachse des Tanks durch eine Schweißnaht verbunden. Die inneren Ränder der Bodenplatten 1, 2 sind mit dem mittleren Rohrteil 3 verbunden, das von beiden Seiten mit zusätzlichen Mittel - Bodenplatten 4 und 5 abgedeckt ist. Die Verbindung der Mittel - Bodenplatten 4 und 5 mit dem Mittelteil 3 ist stabil und dicht, weil der Innenraum der so entstandenen Kammer 6 einen zusätzlichen Arbeitsraum des Tanks bildet, der mit dem toroidförmigen Raum 7 durch die Durchgangsöffnung 8 in dem Mittelteil 3 verbunden ist.

Eine der Bodenplatten 1, 2 hat eine Öffnung mit einem Anschlussstutzen 9, und eine der mittleren Bodenplatten 4, 5 weist ein Ventil 10 mit einem Röhrchen 11 auf der Hochachse des Tanks auf. Die Höhe 11 des Röhrchens ist genau bestimmt, damit bei einer Gefahr bei geöffnetem Ventil Gas durch das Röhrchen austreten kann. Vorzugsweise liegt die Höhe bei über 80% des Gesamtvolumens des Tanks. Das Ventil 10 ist ein Sicherheitsventil, das bei Überdruck im Tank anspricht. Günstig ist es, wenn das Röhrchen 11 mit einer Kappe 12 abgedeckt ist, die das Tröpfeln vermeidet.

Der Tank kann am Umfang einer der Bodenplatten 1, 2 Spannvorrichtungen 13 aufweisen, die der Befestigung des Tanks dienen.

## Patentansprüche

1. Gastank, insbesondere für Flüssiggas Propan-Butan, bestehend aus miteinander verbundenen profilierten Ober-, Unter- und Bodenplatten und einem mittleren profilierten Rohrteil, wobei das mittlere Rohrteil Durchgangsöffnungen und zwei abschließende zusätzliche Bodenplatten hat, und eine der Bodenplatten einen Anschlussstutzen aufweist, **dadurch gekennzeichnet, dass** in einer zusätzlichen mittleren Bodenplatte (4, 5) ein Sicherheitsventil (10) mit einem Röhrchen (11) auf der Hochachse des Tanks angeordnet ist.

2. Gastank nach Anspruch 1, **dadurch gekennzeichnet, dass** das Röhrchen (11) mit einer Kappe (12) abgedeckt ist.

3. Gastank nach Anspruch 1, **dadurch gekennzeichnet, dass** eine der Bodenplatten (1, 2) an ihrem Umfang Spannvorrichtungen (13) aufweist.

4. Gastank nach Anspruch 1, **dadurch gekennzeichnet, dass** die Höhe des Röhrchens größer als 80% des Gesamtvolumens des Tanks beträgt.
